# EUROPEAN PATENT APPLICATION

(11) **EP 1 487 144 A1**
(43) Date of publication of application: **15.12.2004**
(21) Application number: 03807956.2
(22) Date of filing: 14.08.2003
(51) Int. Cl.: H04L 1/00, H04L 29/02, H04L 12/56

(54) **COMMUNICATION TERMINAL DEVICE AND BASE STATION DEVICE**

(30) Priority: 08.10.2002 JP 2002295449
(71) Applicant: MATSUSHITA ELECTRIC INDUSTRIAL CO., LTD., Kadoma-shi, Osaka 571-8501 (JP)
(72) Inventor: UEHARA, Toshiyuki, Yokohama-shi, Kanagawa 232-0011 (JP); NISHIO, Akihiko, Yokosuka-shi, Kanagawa 239-0846 (JP)
(74) Representative: Grünecker, Kinkeldey, Stockmair & Schwanhäusser Anwaltssozietät
(86) International application number: PCT/JP2003/010333
(87) International publication number: WO 2004/034629

(57) **Abstract**

A buffer 106 stores transmission data temporarily. A CQI transmission control section 113 outputs an instruction signal for generating CQI to a CQI generating section 107 when transmission data is accumulated in buffer 106. CQI generating section 107 generates CQI based on quality information when the instruction signal is input from CQI transmission control section 113, and does not generate CQI when the instruction signal is not input from CQI transmission control section 113. A base station information extracting section 108 extracts transmit parameter information and scheduling information included in received data. A channel coding section 109 encodes transmission data based on encoding rate information in the transmit parameter information. A modulator 110 modulates the transmission data based on modulation scheme information in the transmit parameter information. By this means, a large volume of packet data can be communicated at high speed on the uplink in optimum conditions according to communication environment.

## Description

### Technical Field

The present invention relates to a communication terminal apparatus and a base station apparatus, and particularly to a communication terminal apparatus and a base station apparatus in a system that performs high speed packet transmission on the uplink, wherein scheduling is performed by the base station apparatus based on CQI transmitted from the communication terminal apparatus.

### Background Art

To date, in the field of radio communication systems, HSDPA (High Speed Downlink Packet Access) has been standardized where a plurality of communication terminal apparatuses share a downlink channel of high speed and large capacity and high speed packet transmission is performed on the downlink.

In this HSDPA system, a base station apparatus has communication terminal apparatuses transmit a signal indicating the modulation scheme and encoding rate of packet data that can be demodulated in the communication terminal apparatus and being called CQI (Channel Quality Indicator), at a cycle set by the base station apparatus. The base station apparatus having received CQI selects an optimum modulation scheme, encoding rate and the like using CQI transmitted from each communication terminal apparatus, while performing scheduling. Then the base station apparatus modulates and encodes transmission data using such a selected modulation scheme, encoding rate and the like, and transmits the data to each communication terminal apparatus based on the scheduling result. By this means, a large volume of data can be transmitted at high speed from the base station apparatus to the communication terminal apparatus.

However, for conventional communication terminal apparatuses and base station apparatus, large volumes of data are transmitted at high speed from the base station apparatus to the communication terminal apparatuses using a system exclusively for the downlink like the HSDPA system, and when applying this system to the uplink as it is, the problem occurs that optimum scheduling according to data cannot be performed in the base station apparatus.

### Disclosure of Invention

An object of the present invention is to perform optimum scheduling for the uplink according to data in each mobile apparatus.

The object is achieved by configuring a communication terminal apparatus such that when transmission data is accumulated in a buffer, CQI is transmitted and when no transmission data is in the buffer, CQI is not transmitted. Further, when the amount of transmission data accumulated in the buffer is at or above a threshold value so that the transmission data is likely to overflow, or when a small amount of accumulated transmission data is left in the buffer so that the transmission thereof is desirably finished early, the communication terminal apparatus increases the number of transmit slots temporarily and the base station apparatus performs scheduling that preferentially assigns transmission to a communication terminal apparatus from which the number of CQI receive slots in a time unit of CQI transmit assignment has increased, thereby achieving the object. Yet further, when tolerable delay time of transmission data accumulated in the buffer is of a small amount, the communication terminal apparatus increases the number of transmit slots temporarily and the base station apparatus performs scheduling such that a communication terminal apparatus from which the number of CQI receive slots in a time unit of CQI transmit assignment has increased can transmit at high priority, thereby achieving the object.

### Brief Description of Drawings

FIG.1 is a block diagram showing the configuration of a mobile apparatus according to embodiment 1 of the present invention;
FIG.2 is a block diagram showing the configuration of a base station apparatus according to embodiment 1 of the present invention;
FIG.3 is a flow chart showing the operation of the mobile apparatus according to embodiment 1 of the present invention;
FIG.4 is a block diagram showing the configuration of a base station apparatus according to embodiment 2 of the present invention;
FIG.5 is a block diagram showing the configuration of a condition setting section according to embodiment 2 of the present invention;
FIG.6A is a view showing the number of transmit slots for CQI and a pattern of the transmit slots;
FIG.6B is a view showing the number of transmit slots for CQI and a pattern of the transmit slots;
FIG.6C is a view showing the number of transmit slots for CQI and a pattern of the transmit slots;
FIG.7 is a flow chart showing the operation of a mobile apparatus according to embodiment 2 of the present invention;
FIG.8 is a flow chart showing the operation of the mobile apparatus according to embodiment 2 of the present invention;
FIG.9 is a flow chart showing the operation of the base station apparatus according to embodiment 2 of the present invention;
FIG.10 is a block diagram showing the configuration of a mobile apparatus according to embodiment 3 of the present invention;
FIG.11 is a flow chart showing the operation of the mobile apparatus according to embodiment 3 of the present invention;
FIG.12 is a block diagram showing the configuration of a mobile apparatus according to embodiment 4 of the present invention;
FIG.13 is a block diagram showing the configuration of a base station apparatus according to embodiment 4 of the present invention;
FIG.14 is a block diagram showing the configuration of a CQI transmission control section according to embodiment 4 of the present invention;
FIG.15 is a block diagram showing the configuration of a report timing control signal generating section according to embodiment 4 of the present invention;
FIG.16A is a schematic view showing the operation of the mobile apparatus and the base station apparatus according to embodiment 4 of the present invention;
FIG.16B is a schematic view showing the operation of the mobile apparatus and the base station apparatus according to embodiment 4 of the present invention;
FIG.16C is a schematic view showing the operation of the mobile apparatus and the base station apparatus according to embodiment 4 of the present invention;
FIG.16D is a view showing the operation of the mobile apparatus and the base station apparatus according to embodiment 4 of the present invention;
FIG.16E is a view showing the operation of the mobile apparatus and the base station apparatus according to embodiment 4 of the present invention;
FIG.17 is a block diagram showing the configuration of a mobile apparatus according to embodiment 5 of the present invention; and
FIG.18 is a block diagram showing the configuration of a base station apparatus according to embodiment 5 of the present invention.

### Best Mode for Carrying Out the Invention

Embodiments of the present invention will be described in detail below with reference to the drawings.

### (Embodiment 1)

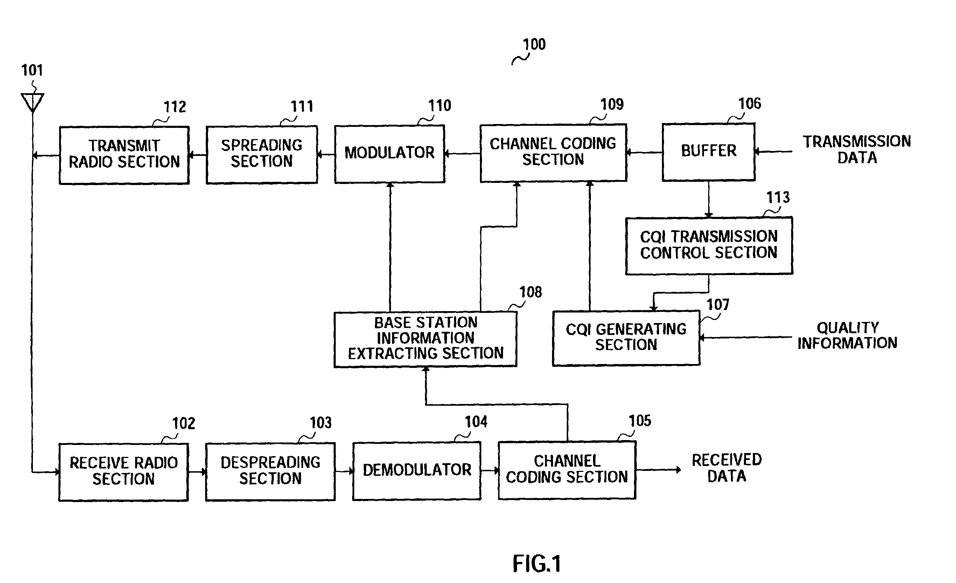

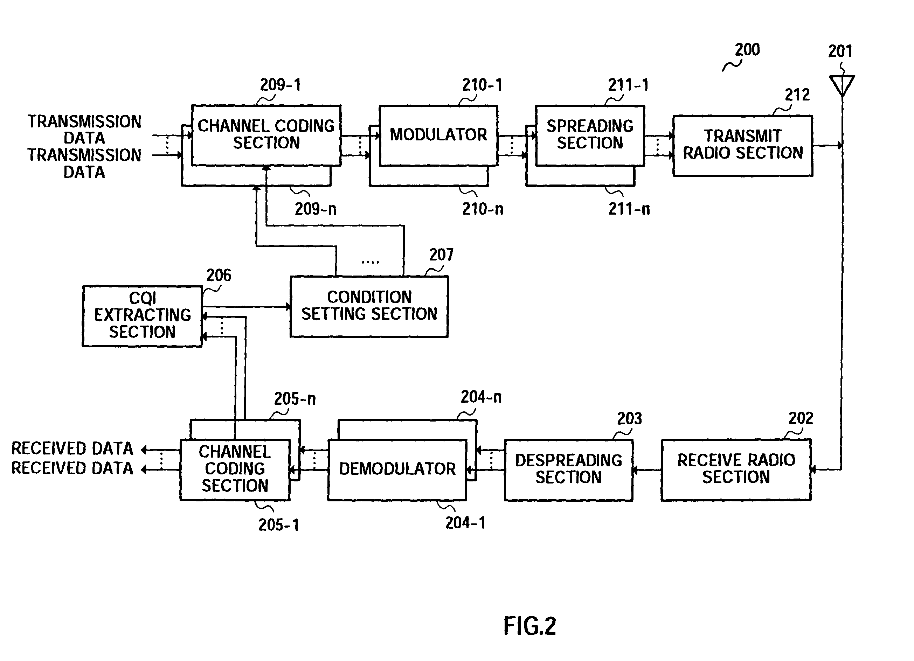

FIG.1 is a diagram showing the configuration of a mobile apparatus 100, a communication terminal apparatus, according to the present embodiment, and FIG.2 is a diagram showing the configuration of a base station apparatus 200.

Mobile apparatus 100 comprises essentially an antenna 101, a receive radio section 102, a despreading section 103, a demodulator 104, a channel coding section 105, a buffer 106, a CQI generating section 107, a base station information extracting section 108, a channel coding section 109, a modulator 110, a spreading section 111, and a transmit radio section 112.

Base station apparatus 200 comprises essentially an antenna 201, a receive radio section 202, a despreading section 203, demodulators 204-1 to 204-n, channel coding sections 205-1 to 205-n, a CQI extracting section 206, a condition setting section 207, channel coding sections 209-1 to 209-n, modulators 210-1 to 210-n, spreading sections 211-1 to 211-n, and a transmit radio section 212.

First, the configuration of mobile apparatus 100 will be described using FIG.1. Receive radio section 102 performs processing such as down-conversion from a radio frequency to a base band frequency on a received signal received by antenna 101 and outputs to the despreading section 103.

Despreading section 103 performs despreading on the received signal inputted from receive radio section 102 using the same spreading code as has been used when spreading and outputs to the demodulator 104.

Demodulator 104 demodulates the received signal inputted from despreading section 103 and outputs to the channel coding section 105.

Channel coding section 105 decodes the received signal inputted from demodulator 104 to obtain received data for this mobile apparatus and outputs the decoded received data to the base station information extracting section 108.

Buffer 106 temporarily stores transmission data and outputs the stored transmission data to the channel coding section 109. Also, buffer 106 outputs a signal to the effect that transmission data has been stored to a CQI transmission control section 113.

When a control signal is inputted from the CQI transmission control section 113, CQI generating section 107 generates CQI based on quality information and outputs the generated CQI to the channel coding section 109. Note that the transmit power or the like of a control channel having its transmit power controlled is used as the quality information.

Base station information extracting section 108 extracts scheduling information and transmit parameter information from the received data inputted from channel coding section 105 and outputs to modulator 110 and channel coding section 109. Here, the transmit parameter information is information such as the modulation scheme and encoding rate used when mobile apparatus 100 generates transmission data, and is calculated by the base station apparatus 200 and then sent in. Also, the scheduling information is information indicating mobile apparatuses that are allowed to transmit and being set by the base station apparatus.

Channel coding section 109 encodes transmission data inputted from buffer 106 and CQI inputted from CQI generating section 107 based on the transmit parameter information and scheduling information inputted from base station information extracting section 108 and outputs to modulator 110. Note that the channel coding section 109 outputs transmission data only when transmission is allowed by scheduling and does not output transmission data when transmission is not allowed.

Modulator 110 modulates the transmission data inputted from channel coding section 109 according to the modulation scheme based on the transmit parameter information inputted from base station information extracting section 108, and outputs to the spreading section 111.

Spreading section 111 performs spreading on the transmission data inputted from modulator 110 using a spreading code and outputs to the transmit radio section 112.

Transmit radio section 112 performs processing such as up-conversion from a base band frequency to a radio frequency on the transmission data inputted from spreading section 111 and transmits via antenna 101.

When a signal to the effect that transmission data has been stored is inputted from buffer 106, CQI transmission control section 113 outputs a control signal to the effect that CQI is to be generated to the CQI generating section 107.

Next, the configuration of base station apparatus 200 will be described using FIG.2. The receive radio section 202 performs processing such as down-conversion from a radio frequency to a base band frequency on a receive signal received by antenna 201 and outputs to the despreading section 203.

Despreading section 203 performs despreading on the receive signal inputted from receive radio section 202 using the same spreading codes as have been used when spreading and outputs to demodulators 204-1 to 204-n.

Demodulators 204-1 to 204-n demodulate the despread receive signals inputted from the despreading section 203 and outputs to the channel coding sections 205-1 to 205-n.

Channel coding sections 205-1 to 205-n decode the receive signals inputted from demodulators 204-1 to 204-n to obtain received data from the respective mobile apparatuses and outputs the decoded received data to CQI extracting section 206.

CQI extracting section 206 extracts CQI transmitted from each mobile apparatus from the received data inputted from channel coding sections 205-1 to 205-n, and outputs the extracted CQIs to the condition setting section 207.

Condition setting section 207 determines transmit parameters based on the CQIs inputted from CQI extracting section 206 while performing scheduling, and outputs the transmit parameter information and the scheduling information to the channel coding sections 209-1 to 209-n.

Channel coding sections 209-1 to 209-n encode the transmit parameter information and scheduling information inputted from condition setting section 207 and outputs to modulators 210-1 to 210-n. At this time, channel coding section 209-1 to 209-n encodes and outputs transmit parameter information to be transmitted to a mobile apparatus as an object to transmit to in scheduling, or when transmitting on a common control channel, which all the mobile apparatuses receive, encodes and outputs as transmit parameter information for the specific channel. Note that transmission data inputted into channel coding section 209-1 to 209-n is encoded separately from the transmit parameter information and scheduling information.

Modulator 210-1 to 210-n modulates the transmission data inputted from channel coding section 209-1 to 209-n and outputs to the spreading section 211-1 to 211-n.

Spreading section 211-1 to 211-n performs spreading on the transmission data inputted from the modulator 210-1 to 210-n using a spreading code and outputs to the transmit radio section 212.

Transmit radio section 212 performs processing such as up-conversion from a base band frequency to a radio frequency on the transmission data inputted from spreading section 211-1 to 211-n and transmits via antenna 201.

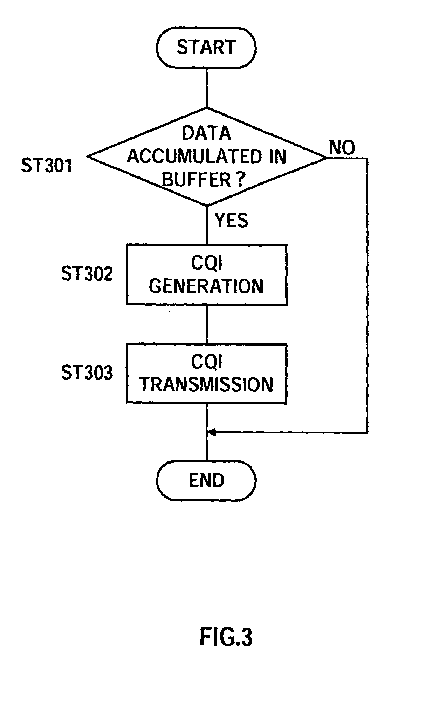

Next, the operation of mobile apparatus 100 will be explained using the flow chart of FIG.3. CQI transmission control section 113 determines whether transmission data is accumulated in buffer 106 (step (hereinafter, written as "ST") 301). When transmission data is accumulated in buffer 106, CQI transmission control section 113 outputs a control signal to the effect that CQI is to be generated to CQI generating section 107, and CQI generating section 107 generates CQI (ST302). On the other hand, when CQI transmission control section 113 has determined that transmission data is not accumulated in buffer 106, CQI transmission control section 113 does not output the control signal to CQI generating section 107, and CQI generating section 107 does not generate CQI. Next, channel coding section 109 encodes the generated CQI; modulator 110 modulates; spreading section 111 performs spreading; and transmit radio section 112 performs processing such as up-conversion from a base band frequency to a radio frequency and transmits the CQI via antenna 101 (ST303).

As described above, according to the communication terminal apparatus and the base station apparatus of the present embodiment, when transmission data is accumulated in the buffer, CQI is transmitted and when transmission data is not accumulated in the buffer, CQI is not transmitted. Thus, when the mobile apparatus has data to be transmitted, the base station apparatus performs scheduling based on the CQI. Hence, for the uplink, optimum scheduling can be performed according to data in each mobile station. Furthermore, because CQI is transmitted only when data to be transmitted exists, power consumption can be reduced.

Although in the present embodiment, CQI is transmitted regardless of the cumulative amount when transmission data is accumulated in the buffer, not being limited to the case where CQI is always transmitted when transmission data is accumulated in the buffer, it may be so configured that CQI is transmitted when the cumulative amount of transmission data accumulated in the buffer becomes equal to or greater than a threshold value.

### (Embodiment 2)

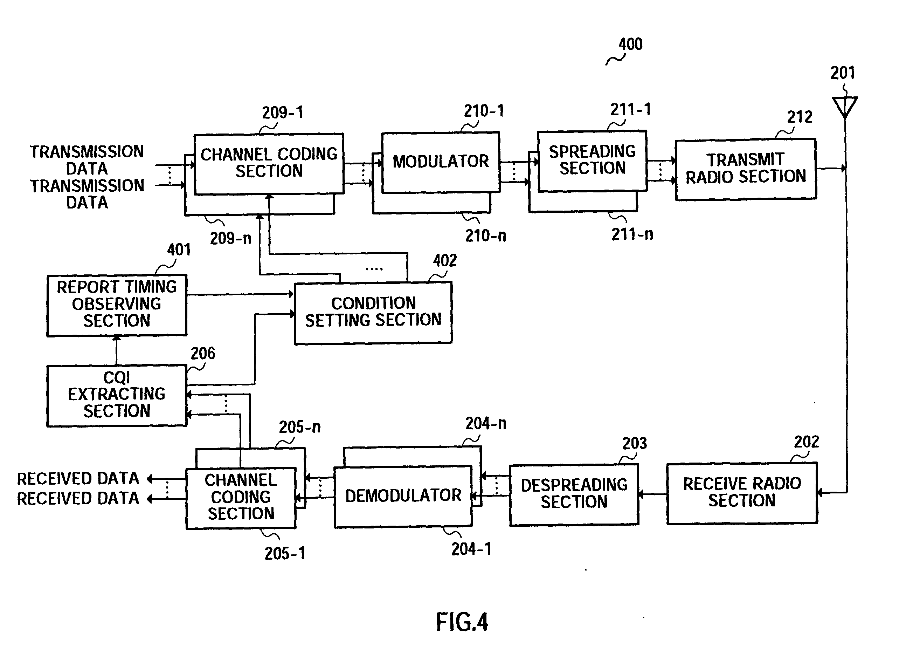

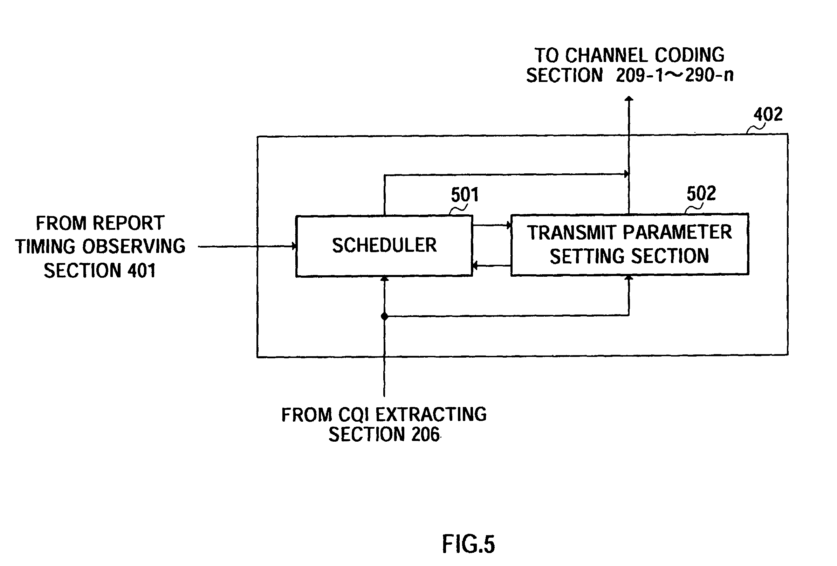

FIG.4 is a diagram showing the configuration of a base station apparatus 400 according to the present embodiment, and FIG.5 is a diagram showing the configuration of a condition setting section 402. The present embodiment is characterized in that the number of transmit slots for CQI is increased and decreased according to the amount of data accumulated in the buffer in mobile apparatus 100. In the present embodiment, the configuration of FIG.4 differs from that of FIG.2 in that a report timing observing section 401 is provided. Because the configuration of the mobile apparatus is the same as in FIG.1, a description thereof is omitted. Moreover, in FIG.4, the same constituents as in FIG.2 are indicated by the same reference numerals and a description thereof is omitted.

CQI transmission control section 113 of mobile apparatus 100 compares the cumulative amount of transmission data accumulated in buffer 106 with a threshold value, which amount is input from the buffer, and when the cumulative amount is at or above the threshold value, outputs a control signal for increasing the number of slots in a time unit of CQI transmit assignment over a usual number of CQI transmit slots to CQI generating section 107. Moreover, CQI transmission control section 113 receives from buffer 106 a value related to the transmission data other than the cumulative amount of data in buffer 106 and controls to transmit CQIs in a transmit pattern of transmit slots according to the value. Only the transmit pattern of transmit slots is changed without changing the number of CQI transmit slots in a time unit of CQI transmit assignment. Here, the value related to data is a value based on some information about data such as the type of data, e.g., voice data and image data, QoS (Quality of Service), and the number of retransmission times. The method for increasing and decreasing the time unit of CQI transmit assignment and the number of CQI transmit slots in a time unit of CQI transmit assignment will be described later.

CQI generating section 107 generates CQI based on the control signal inputted from CQI transmission control section 113 and quality information, and outputs to channel coding section 109. Furthermore, CQI generating section 107 generates CQIs in a transmit pattern of transmit slots according to priority based on the control signal inputted from CQI transmission control section 113.

Next, the configuration of base station apparatus 400 will be described using FIG.4. Report timing observing section 401 classifies the numbers of receive slots according to the number of receive slots in a time unit of CQI transmit assignment, determines which segment each mobile apparatus 100 belongs to, and outputs the segment to which each mobile apparatus 100 belongs to condition setting section 402. Furthermore, report timing observing section 401 outputs receive timings for CQI receive slots in a time unit of CQI transmit assignment to condition setting section 402.

Condition setting section 402 performs scheduling based on CQIs inputted from CQI extracting section 206, and the segment information and receive pattern of CQI receive slots in a time unit of CQI transmit assignment inputted from report timing observing section 401, determines transmit parameters, and outputs the scheduling information and the transmit parameter information to channel coding sections 209-1 to 209-n.

Next, the configuration of condition setting section 402 will be described using FIG.5. Condition setting section 402 comprises essentially a scheduler 501 and a transmit parameter setting section 502.

Scheduler 501 determines a mobile apparatus to which transmission data is to be transmitted based on CQIs inputted from CQI extracting section 206, and the segment information and receive timing information inputted from report timing observing section 401, and the transmit parameter information inputted from transmit parameter setting section 502, and outputs scheduling information indicating a mobile station to which transmission is allowed to channel coding sections 209-1 to 209-n. Scheduler 501 determines that a mobile apparatus 100 from which the number of CQI receive slots in a time unit of CQI transmit assignment is large has transmission data that it wants to transmit early, and performs scheduling such that the mobile apparatus 100 having transmission data that it wants to transmit early can transmit at higher priority than the other mobile apparatuses 100.

Transmit parameter setting section 502 determines the modulation scheme and encoding rate based on CQI inputted from CQI extracting section 206 and outputs the determined modulation scheme and encoding rate as transmit parameter information to channel coding section 209-1 to 209-n. Note that the transmit parameters are not limited to an encoding rate and a modulation scheme but may be other parameters such as the number of multiple codes.

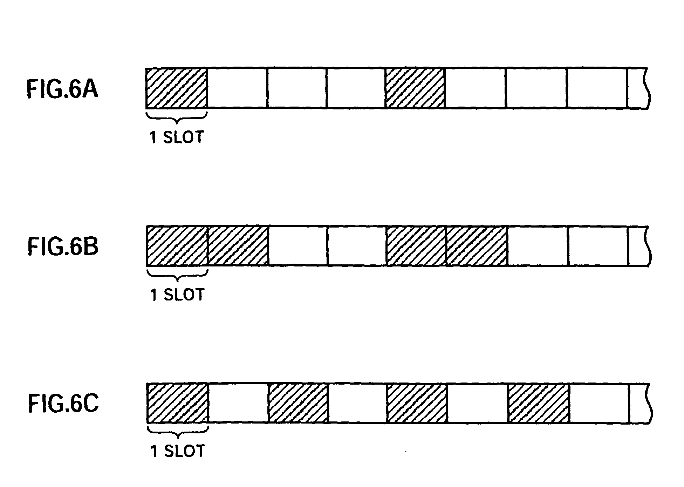

Next, the method of changing the time unit of CQI transmit assignment and the number of CQI transmit slots in a time unit of CQI transmit assignment will be explained using FIG.6 as an example.

FIG.6A is a view showing the case of transmitting in a usual number of CQI transmit slots in a time unit of CQI transmit assignment, and as indicated by oblique hatching, CQIs are transmitted at three-slot intervals, for example, in the first slot, the fifth slot, etc. Thus, in the case of transmitting in a usual number of CQI transmit slots, a CQI is transmitted in only one slot of every four slots. Here, in the case where the number of CQI transmit slots is increased as in FIGS. 6(b) and 6(c) over the usual number of CQI transmit slots in FIG.6A, the time unit of CQI transmit assignment is a time unit of four slots. Note that the time unit of CQI transmit assignment is not limited to the time unit of four slots but can be a time unit of any number of slots.

A first method of changing the number of CQI transmit slots is to repeat two consecutive CQI transmission slots and two consecutive CQI non-transmission slots such as the first slot, second slot, fifth slot, sixth slot, etc., as shown by oblique hatching in FIG.6B. Thus, in the first method of changing the number of CQI transmit slots, CQIs are consecutively transmitted in first two slots of every four slots.

A second method of changing the number of CQI transmit slots is to transmit a CQI in every other slot such as the first slot, third slot, fifth slot, seventh slot, etc., as shown by oblique hatching in FIG.6C. Thus, in the second method of changing the number of CQI transmit slots, CQIs are transmitted at one-slot intervals in every four slots.

Here, in FIGS. 6(b) and 6(c), the numbers of CQI transmit slots in a time unit of CQI transmit assignment are the same, but the patterns of CQI transmit slots in a time unit of CQI transmit assignment are different. By the mobile apparatus changing the transmission pattern according to the priority information of transmission data as described above, the base station apparatus can perform scheduling taking the transmission pattern into account.

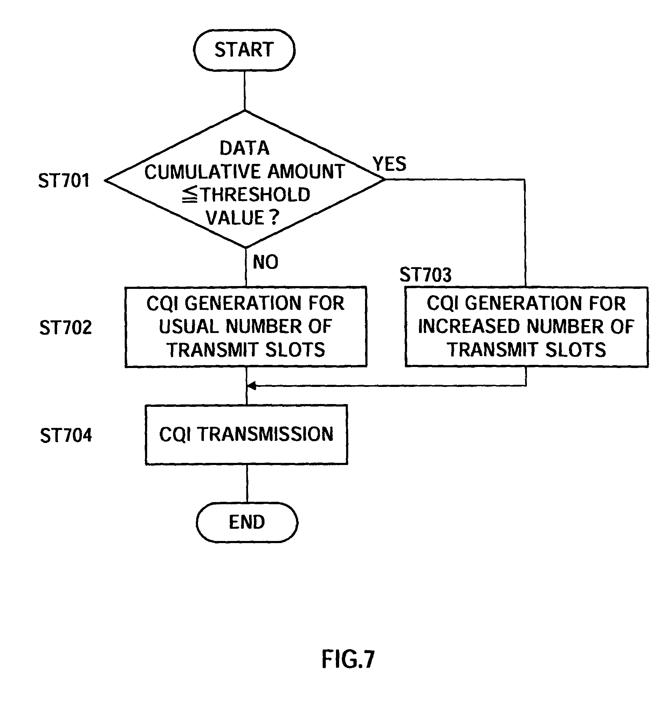

Next, the operation of mobile apparatus 100 will be explained using FIG.7. First, the case where, when the amount of data left in buffer 106 is small, scheduling is made such that the transmission thereof finishes earlier will be explained. CQI transmission control section 113 compares the cumulative amount of transmission data with a threshold value, which amount is input from the buffer 106 (ST701), and when the cumulative data amount is greater than the threshold value, because it still takes a long time to finish transmitting all transmission data, outputs an instruction signal instructing to generate CQIs in a usual number of CQI transmit slots in a time unit of CQI transmit assignment to CQI generating section 107. CQI generating section 107 generates CQIs and outputs to channel coding section 109 (ST702). On the other hand, when the cumulative data amount inputted from buffer 106 is not greater than the threshold value, in order to notify to that effect, CQI transmission control section 113 outputs an instruction signal instructing to generate CQIs in an increased number of transmit slots over the usual number of CQI transmit slots in a time unit of CQI transmit assignment to CQI generating section 107, and CQI generating section 107 having the instruction signal instructing to generate CQIs inputted generates CQIs and outputs to channel coding section 109 (ST703). Moreover, CQI transmission control section 113 outputs to CQI generating section 107 a control signal for generating CQIs in the transmit pattern of CQI transmit slots in a time unit of CQI transmit assignment according to the value related to transmission data. Then, CQI generating section 107 generates CQIs according to the control signal from CQI transmission control section 113. Next, channel coding section 109 encodes the generated CQI; modulator 110 adaptively modulates; spreading section 111 performs spreading; and transmit radio section 112 performs processing such as up-conversion from a base band frequency to a radio frequency and transmits the CQI via antenna 101 (ST704).

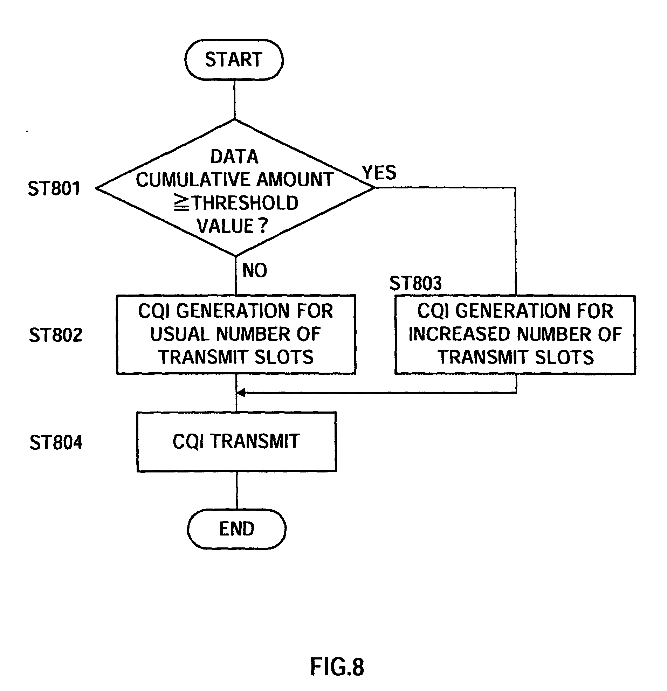

Next, the operation of mobile apparatus 100 when scheduling is performed such that transmission data accumulated in buffer 106 does not overflow will be explained using FIG.8. CQI transmission control section 113 compares the cumulative amount of transmission data with the threshold value, which amount is input from the buffer 106 (ST801), and when the cumulative data amount is less than the threshold value, because transmission data does not overflow buffer 106, outputs timing information for the usual number of CQI transmit slots in a time unit of CQI transmit assignment to CQI generating section 107, and CQI generating section 107 generates CQIs and outputs to channel coding section 109 (ST802). On the other hand, when the cumulative data amount inputted from buffer 106 is not less than the threshold value, because transmission data may overflow buffer 106, transmission control section 113 outputs timing information for an increased number of slots over the usual number of CQI transmit slots in a time unit of CQI transmit assignment to CQI generating section 107, and CQI generating section 107 generates CQIs and outputs to channel coding section 109 (ST803). Moreover, CQI transmission control section 113 outputs to CQI generating section 107 a control signal for generating CQIs in the transmit pattern of CQI transmit slots in a time unit of CQI transmit assignment according to the value related to the transmission data. CQI generating section 107 generates CQIs according to the control signal from CQI transmission control section 113. Next, channel coding section 109 encodes the generated CQI; modulator 110 adaptively modulates; spreading section 111 performs spreading; and transmit radio section 112 performs processing such as up-conversion from a base band frequency to a radio frequency and transmits the CQI via antenna 101 (ST804).

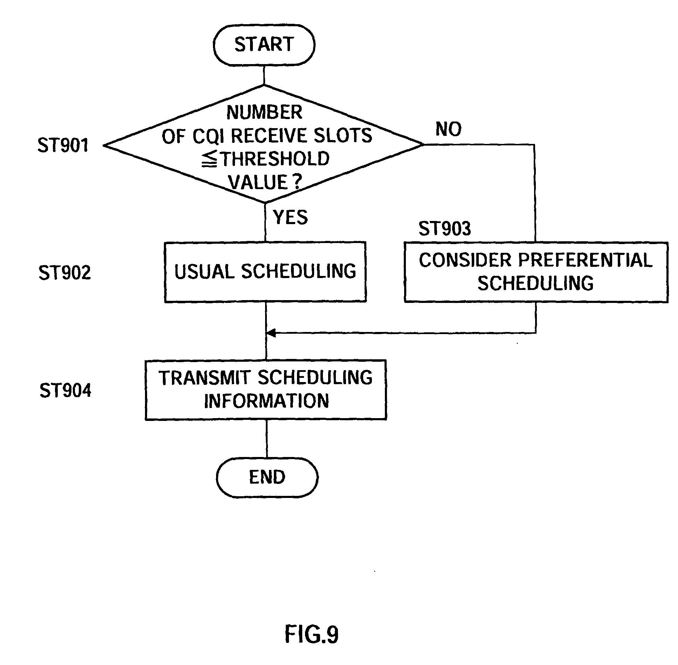

Next, the configuration of base station apparatus 400 will be described using FIG.9. Base station apparatus 400 extracts CQI for each mobile apparatus 100 from the receive signal by CQI extracting section 206, and report timing observing section 401 compares the number of CQI receive slots in a time unit of CQI transmit assignment with a threshold value (ST901), and as a result of the comparing, when the number of CQI receive slots is not greater than the threshold value, usual scheduling is performed (ST902). On the other hand, when in ST901 the number of CQI receive slots is greater than the threshold value, preferential scheduling is considered (ST903). Note that the threshold value for comparison in ST901 is for determining whether usual scheduling is performed or preferential scheduling is considered, and that when it is determined to consider preferential scheduling, additional threshold values are set according to priority for them, to set levels of priority for the mobile apparatuses respectively. Next, the scheduling result is transmitted as scheduling information (ST904).

As described above, according to the communication terminal apparatus and the base station apparatus of the present embodiment, the mobile apparatus changes the number of CQI transmit slots in a time unit of CQI transmit assignment according to the transmission data amount, and the base station apparatus, by measuring the number of incoming CQI slots in a time unit of CQI transmit assignment, can estimate the amount of to-be-transmitted data in the mobile apparatus, and the estimating result can be taken into account in scheduling. Thus, optimum scheduling can be performed for the uplink according to the data amount in each mobile apparatus. Furthermore, data can be transmitted on the uplink efficiently using resources. Moreover, because the transmit pattern of CQI transmit slots in a time unit of CQI transmit assignment is changed according to the value related to data transmission, more elaborate scheduling can be performed, and because the number of CQI transmission times need not be reduced, the base station apparatus can receive an enough number of CQIs when scheduling. Thus, communication of high speed and large capacity can be performed according to the propagation path state.

Note that although in the present embodiment information about transmission data is indirectly informed by using the number of transmit slots and the transmit pattern, only one of the number of transmit slots and the transmit pattern may be used.

### (Embodiment 3)

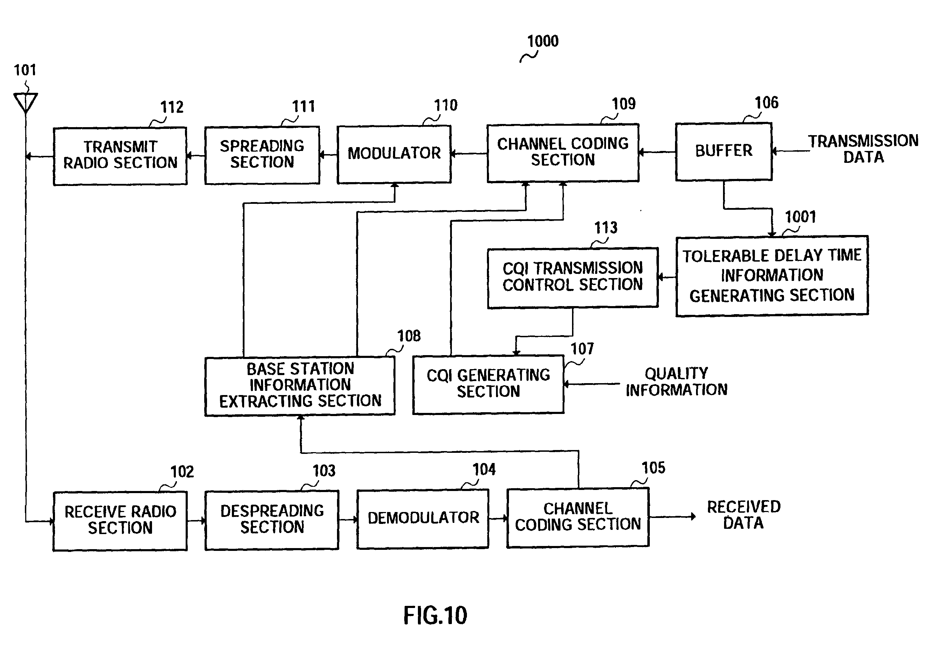

FIG.10 is a diagram showing the configuration of a mobile apparatus 1000 according to the present embodiment. The present embodiment is.characterized in that the number of CQI transmit slots in a time unit of CQI transmit assignment is changed according to tolerable delay time. In the present embodiment, the configuration of FIG.10 differs from that of FIG.1 in that a tolerable delay time information generating section 1001 is provided. Note that the same constituents as in FIG.1 are indicated by the same reference numerals and a description thereof is omitted. Also, because the configuration of the base station apparatus is the same as in FIG.4, a description thereof is omitted.

First, the configuration of mobile apparatus 1000 will be explained using FIG.10. CQI transmission control section 113 compares tolerable delay time information inputted from tolerable delay time information generating section 1001 with a threshold value, and when the tolerable delay time is at or above the threshold value, outputs a control signal for generating CQIs in a usual number of transmit slots in a time unit of CQI transmit assignment to CQI generating section 107. On the other hand, when the tolerable delay time is less than the threshold value, CQI transmission control section 113 outputs a control signal for generating CQIs in an increased number of CQI transmit slots in a time unit of CQI transmit assignment to CQI generating section 107. Moreover, CQI transmission control section 113 receives information related to the transmission data other than the tolerable delay time and controls to transmit CQIs in a transmit pattern of transmit slots according to the information. Only the transmit pattern of transmit slots is changed without changing the number of CQI transmit slots in a time unit of CQI transmit assignment.

Tolerable delay time information generating section 1001 determines the tolerable delay time based on data accumulated in buffer 106, and outputs the determined tolerable delay time as tolerable delay time information to CQI transmission control section 113. Here, the tolerable delay time is a time in which the data is to be transmitted or remaining time until the time when the data desirably has been transmitted.

When the type of data to be transmitted is the data type such as voice whose communication contents cannot be communicated to the receiving partner if the receiving side receives them delayed during communication, the tolerable delay time is short.

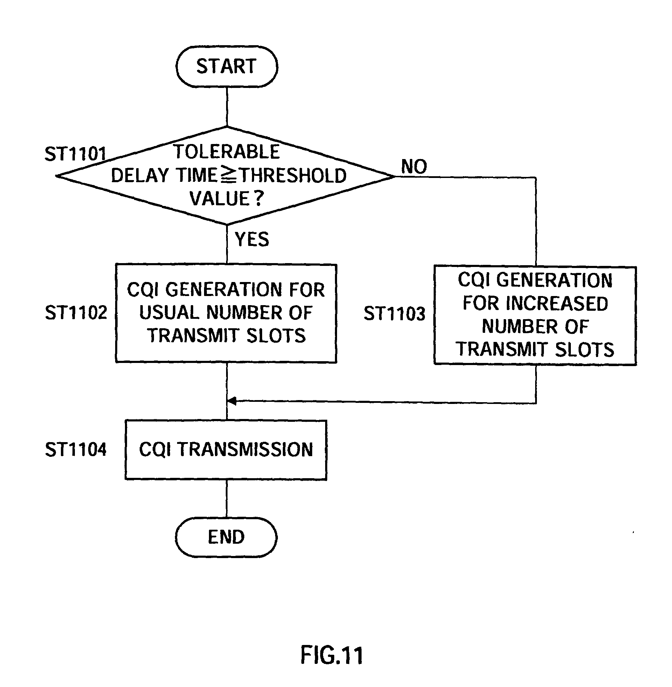

Next, the operation of mobile apparatus 1000 will be explained using FIG.11. CQI transmission control section 113 compares the tolerable delay time with the threshold value (ST1101), and when the tolerable delay time is at or above the threshold value, outputs a control signal for generating CQIs in a usual number of transmit slots in a time unit of CQI transmit assignment. Then CQI generating section 107 generates CQIs (ST1102). On the other hand, when the tolerable delay time is less than the threshold value, CQI transmission control section 113 outputs a control signal controlling to generate CQIs in an increased number of CQI transmit slots in a time unit of CQI transmit assignment to CQI generating section 107. Then CQI generating section 107 generates CQIs (ST1103).

CQI transmission control section 113 outputs to CQI generating section 107 a control signal for generating CQIs in a transmit pattern of CQI transmit slots in a time unit of CQI transmit assignment according to the value related to transmission data. CQI generating section 107 generates CQIs based on the control signal from CQI transmission control section 113. Next, CQI generating section 107 outputs the generated CQI to channel coding section 109; channel coding section 109 encodes the generated CQI; modulator 110 adaptively modulates; spreading section 111 performs spreading; and transmit radio section 112 performs processing such as up-conversion from a base band frequency to a radio frequency and transmits the CQI via antenna 101 (ST1104). Note that because the operation of the base station apparatus is the same as that of base station apparatus 200 in the above embodiment 2, a description thereof is omitted.

As described above, according to the communication terminal apparatus and the base station apparatus of the present embodiment, the mobile apparatus changes the number of CQI transmit slots in a time unit of CQI transmit assignment based on the tolerable delay time, and the base station apparatus, by measuring the number of incoming CQI slots in a time unit of CQI transmit assignment, can estimate the tolerable delay time for data in the mobile apparatus, and the estimating result can be taken into account in scheduling. Thus, optimum scheduling can be performed for the uplink according to the data in each mobile apparatus. Furthermore, data can be transmitted on the uplink efficiently using resources. Moreover, because the transmit pattern of CQI transmit slots in a time unit of CQI transmit assignment is changed according to the value related to data transmission, more elaborate scheduling can be performed, and because the number of CQI transmission times need not be reduced, the base station apparatus can receive an enough number of CQIs when scheduling. Thus, communication of high speed and large capacity can be performed according to the propagation path condition.

Note that although in the present embodiment information about transmission data is indirectly informed by using the number of transmit slots and the transmit pattern, only one of the number of transmit slots and the transmit pattern may be used. (Embodiment 4)

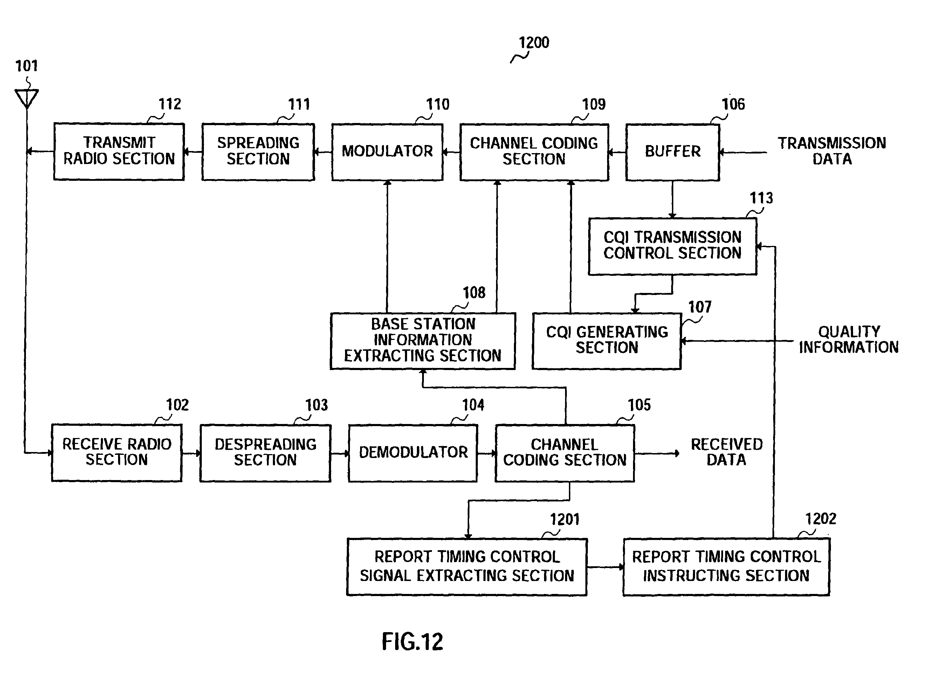

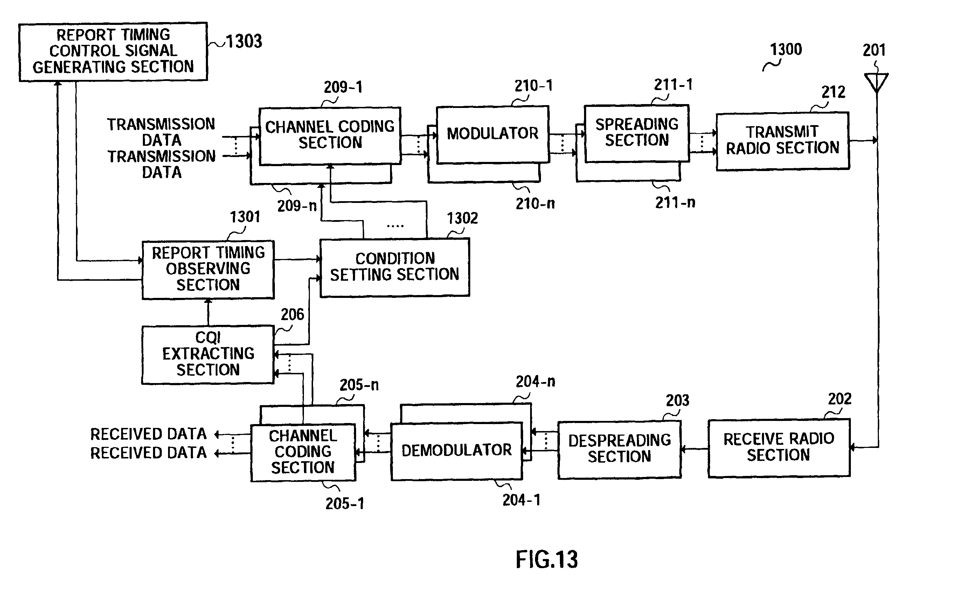

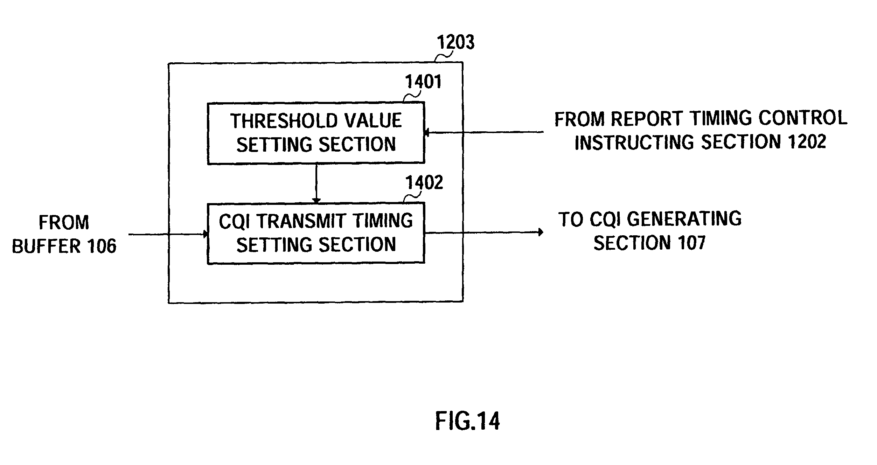

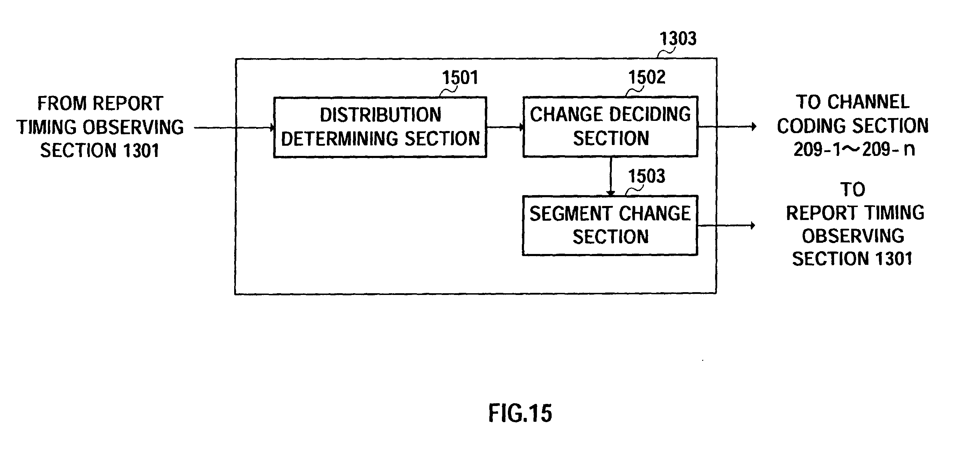

FIG.12 is a diagram showing the configuration of a mobile apparatus 1200 according to the present embodiment; FIG.13 is a diagram showing the configuration of a base station apparatus 1300 according to the present embodiment; FIG.14 is a diagram showing the configuration of a CQI transmission control section 1203; and FIG.15 is a diagram showing the configuration of a report timing control signal generating section 1303. The present embodiment is characterized in that when the amounts of transmission data accumulated in buffers 106 of multiple mobile apparatuses 1200 are about the same, by changing threshold voltages with which the amounts of transmission data accumulated in buffers 106 are compared, the mobile apparatuses 1200 having about the same amounts of transmission data are made to report CQIs so as to be able to perform more elaborate scheduling. In the present embodiment, the configuration of FIG.12 differs from that of FIG.1 in that a report timing control signal extracting section 1201 and a report timing control instructing section 1202 are provided, and the configuration of FIG.13 differs from that of FIG.2 in that a report timing observing section 1301 and a report timing control signal generating section 1303 are provided. The same constituents as in FIGS. 1 and 2 are indicated by the same reference numerals and a description thereof is omitted.

First, the configuration of mobile apparatus 1200 will be described using FIG.12. CQI transmission control section 1203 sets a threshold value according to an instruction signal for setting a threshold value inputted from report timing control instructing section 1202. Then, CQI transmission control section 1203 compares the cumulative amount of transmission data accumulated in buffer 106 with the set threshold value, which amount is input from the buffer, and when the cumulative amount is at or above the threshold value, outputs a control signal controlling to generate CQIs so as to increase the number of slots in a time unit of CQI transmit assignment over a usual number of CQI transmit slots to CQI generating section 107. Moreover, CQI transmission control section 1203 receives from buffer 106 a value related to the transmission data other than the cumulative amount of the data in buffer 106 and controls to transmit CQIs in a transmit pattern of transmit slots according to priority. Only the transmit pattern of transmit slots is changed without changing the number of CQI transmit slots in a time unit of CQI transmit assignment.

Report timing control signal extracting section 1201 extracts segment information included therein from the received data inputted from the channel coding section 105 and outputs to the report timing control instructing section 1202.

Report timing control instructing section 1202 determines a threshold value with which CQI transmission control section 1203 compares the amount of transmission data accumulated in buffer 106, based on the segment information inputted from report timing control signal extracting section 1201, and outputs the determined threshold value information to CQI transmission control section 1203.

Next, the configuration of base station apparatus 1300 will be described using FIG.13. Report timing observing section 1301 as observing means measures the number of CQI receive slots in a time unit of CQI transmit assignment inputted from CQI extracting section 206, and outputs the measured number of receive slots as timing information to a condition setting section 1302.

Report timing observing section 1301 classifies the numbers of receive slots according to the number of receive slots in a time unit of CQI transmit assignment, determines which segment each mobile apparatus 1200 belongs to, and outputs the segment to which each mobile apparatus 1200 belongs to the report timing control signal generating section 1303. Furthermore, report timing observing section 1301 can change the threshold value for each segment under the control of report timing control signal generating section 1303. Yet further, report timing observing section 1301 outputs the receive pattern of CQI receive slots in a time unit of CQI transmit assignment to condition setting section 1302.

Condition setting section 1302 determines transmit parameters by using the CQIs inputted from CQI extracting section 206, and the numbers of CQI receive slots in a time unit of CQI transmit assignment and receive patterns of CQI receive slots in a time unit of CQI transmit assignment inputted from report timing observing section 1301, while performing scheduling, and outputs to the channel coding sections 209-1 to 209-n.

Report timing control signal generating section 1303 outputs information indicating the number of times to report CQI and segments for which timing is to be changed to the channel coding section 209-1 to 209-n. Also, at the same time, report timing control signal generating section 1303 outputs to report timing observing section 1301 a signal to change the threshold value for each segment. For example, when mobile apparatuses 1200 are concentrated in a same segment, report timing control signal generating section 1303 can determine a mobile apparatus 1200 that is to be preferentially scheduled by controlling to divide the concentrated segment further.

Channel coding section 209-1 to 209-n encodes the transmit parameter information and scheduling information inputted from condition setting section 1302 and the segment information inputted from report timing control signal generating section 1303, and outputs to modulator 210-1 to 210-n. At this time, channel coding section 209-1 to 209-n encodes and outputs the transmit parameter information to be transmitted to a mobile apparatus as an object to transmit to in scheduling, or when transmitting on a common control channel, which all the mobile apparatuses receive, encodes and outputs as transmit parameter information for the specific channel. Note that because the operation of mobile apparatus 1200 is the same as that of the above embodiment 2 shown in FIGS. 7 and 8 except that the threshold value to be used in CQI transmission control section 1203 is set based on the segment information transmitted from base station apparatus 1300, a description thereof is omitted.

Next, the configuration of CQI transmission control section 1203 will be described using FIG.14. CQI transmission control section 1203 comprises essentially a threshold value setting section 1401 and a CQI transmit timing setting section 1402.

Threshold value setting section 1401 sets a threshold value for each segment according to an instruction signal for setting a threshold value inputted from report timing control instructing section 1202. When the instruction signal is an instruction signal to the effect that the threshold value is to be changed, the threshold value is changed, and when the instruction signal is an instruction signal to the effect that the threshold value is to be unchanged, the threshold value is not changed. The threshold value for each segment is set by threshold value setting section 1401 to become the same as the threshold value for the segment in report timing observing section 1301. Then, threshold value setting section 1401 outputs the set threshold values to CQI transmit timing setting section 1402.

CQI transmit timing setting section 1402 compares the threshold values inputted from threshold value setting section 1401 and the cumulative amount of transmission data inputted from buffer 106, and outputs a control signal for transmitting in CQI transmit slots for the segment to which the cumulative amount of transmission data belongs to CQI generating section 107. Furthermore, CQI transmit timing setting section 1402 outputs an instruction signal for generating CQIs to CQI generating section 107 based on information related to the transmission of data inputted from buffer 106.

Next, the configuration of report timing control signal generating section 1303 will be described using FIG.15. Report timing control signal generating section 1303 comprises essentially a distribution determining section 1501, a change deciding section 1502, and a segment change section 1503.

Distribution determining section 1501 determines whether a segment in which mobile apparatuses 1200 are concentrated exists and whether a mobile apparatus 1200 that belongs to a segment of high priority exists, based on the segment to which the number of CQI receive slots in a time unit of CQI transmit assignment from each mobile apparatus 1200, inputted from report timing observing section 1301, belongs. Then, distribution determining section 1501 outputs the determining results to the change deciding section 1502.

Change deciding section 1502 outputs segment information decided based on the determining results inputted from distribution determining section 1501 to channel coding sections 209-1 to 209-n. Specifically, in the case of no change to the threshold value for each segment, the change deciding section 1502 outputs the segment information as it is, without a change to the threshold value for each segment to channel coding sections 209-1 to 209-n, or does not send a signal. On the other hand, when mobile apparatuses 1200 are concentrated in a same segment, the change deciding section 1502 decides to set threshold values for dividing the concentrated segment further. Moreover, when no mobile apparatus 1200 exists in the segment of the largest number of receive slots in a time unit of CQI transmit assignment, in order to determine a mobile apparatus 1200 that is to be preferentially scheduled, it is decided to change the threshold values for all segments. When it is decided to change the threshold values for the segments, a signal for changing the segments and distribution information of the mobile apparatuses 1200 are output to the segment change section 1503.

When receiving a signal to the effect that the change of the segments is decided, the segment change section 1503 changes the threshold values for the segments based on the distribution information inputted from the change deciding section 1502 and outputs information about the changed threshold value for each segment to report timing observing section 1301.

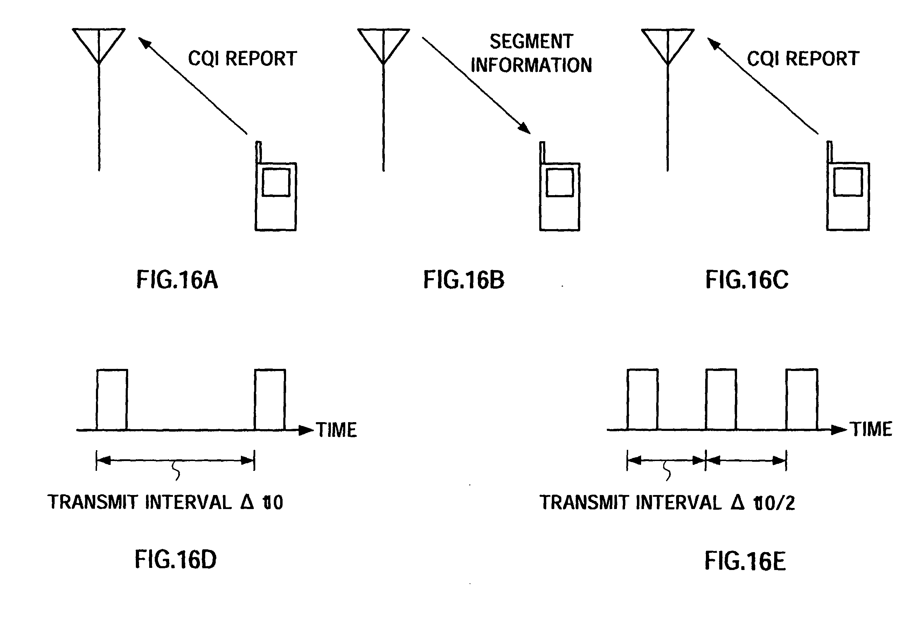

Next, the transmitting and receiving of CQI and a transmit timing control signal in mobile apparatus 1200 and base station apparatus 1300 will be explained using FIG.16. Mobile apparatus 1200, as shown in FIG.16A, transmits CQI to base station apparatus 1300. At this time, the CQI transmission interval is Δt10 as shown in FIG.16D. Next, base station apparatus 1300 having received the CQI sets segments according to the distribution of mobile apparatuses 1200 over in the segments in the report timing observing section 1301, and transmits the set segment information to each mobile apparatus 1200 as shown in FIG.16B. Mobile apparatus 1200 having received the segment information sets a threshold value in CQI transmission control section 113 taking the segment information into account, compares the set threshold value and the amount of transmission data accumulated in buffer 106, changes the CQI transmission interval to Δt10/2 as shown in FIG.16D for example, and transmits CQI to base station apparatus 1300 as shown in FIG.16C.

As described above, according to the communication terminal apparatus and the base station apparatus of the present embodiment, in addition to the effect of the above embodiment 2, the threshold value with which the amount of transmission data accumulated in the buffer is compared is set based on the segment information transmitted from the base station apparatus. Hence, even when the amount of transmission data accumulated in the buffer is about the same as in other mobile apparatuses, preferential scheduling can be performed among those mobile apparatuses, and elaborate scheduling can be performed according to the data amount.

Note that although in the present embodiment information about transmission data is indirectly informed by using the number of transmit slots and the transmit pattern, only one of the number of transmit slots and the transmit pattern may be used. (Embodiment 5)

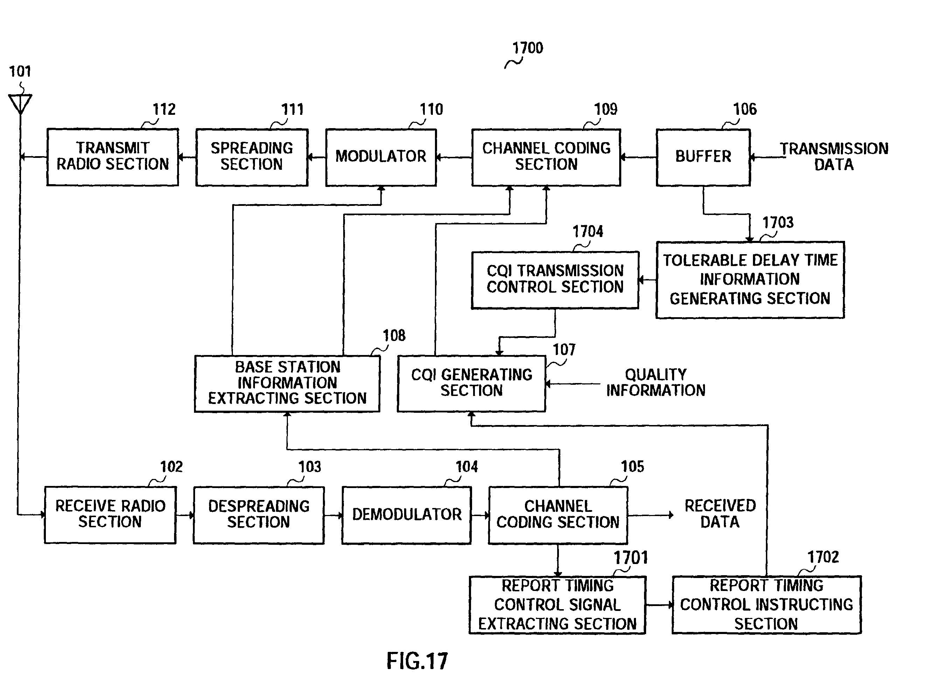

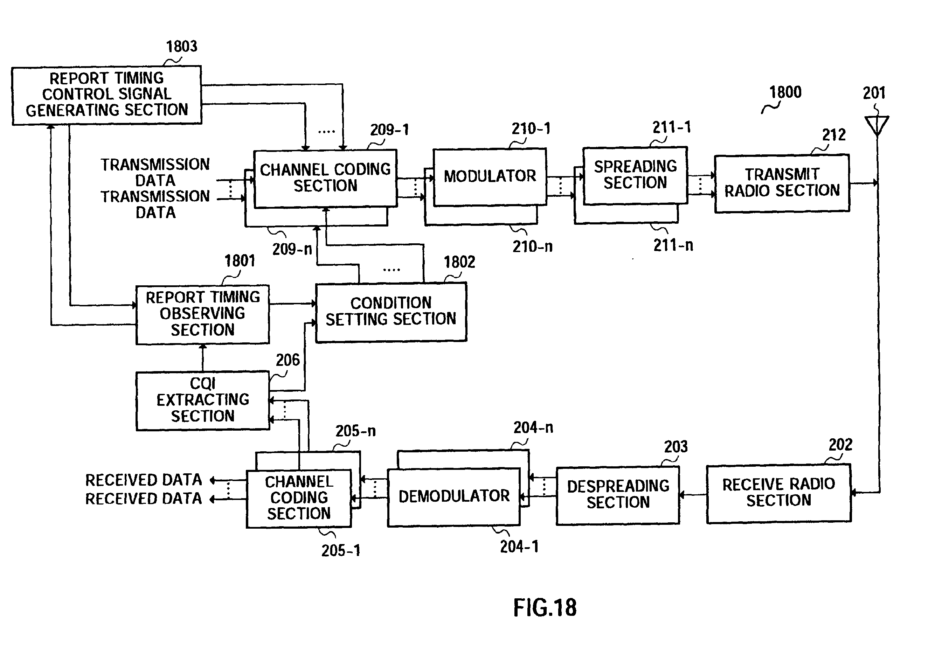

FIG.17 is a diagram showing the configuration of a mobile apparatus 1700 according to the present embodiment, and FIG.18 is a diagram showing the configuration of a base station apparatus 1800 according to the present embodiment. The present embodiment is characterized in that when the tolerable delay times of transmission data accumulated in buffers 106 of multiple mobile apparatuses 1700 are about the same, by changing threshold voltages with which the tolerable delay times are compared, more elaborate scheduling is performed for the mobile apparatuses 1700 having about the same tolerable delay times. In the present embodiment, the configuration of FIG.17 differs from that of FIG.1 in that a report timing control signal extracting section 1701, a report timing control instructing section 1702 and a tolerable delay time information generating section 1703 are provided, and the configuration of FIG.18 differs from that of FIG.2 in that a report timing observing section 1801 and a report timing control signal generating section 1803 are provided. The same constituents as in FIGS. 1 and 2 are indicated by the same reference numerals and a description thereof is omitted.

First, the configuration of mobile apparatus 1700 will be described using FIG.17. CQI transmission control section 1704 sets a threshold value according to an instruction signal for setting a threshold value inputted from report timing control instructing section 1702. Then, CQI transmission control section 1704 compares the tolerable delay time inputted from tolerable delay time information generating section 1703 with the set threshold value, and when the tolerable delay time is at or above the threshold value, outputs an instruction signal instructing to increase the number of slots in a time unit of CQI transmit assignment over a usual number of CQI transmit slots to CQI generating section 107. Moreover, CQI transmission control section 1704 receives from buffer 106 information related to the transmission data other than the tolerable delay time of the transmission data in buffer 106 and controls to transmit CQIs in a transmit pattern of transmit slots according to the information. Only the transmit pattern of transmit slots is changed without changing the number of CQI transmit slots in a time unit of CQI transmit assignment.

Report timing control signal extracting section 1701 extracts segment information included therein from the received data inputted from the channel coding section 105 and outputs to the report timing control instructing section 1702.

Report timing control instructing section 1702 determines a threshold value which is compared with the tolerable delay time output from tolerable delay time information generating section 1703, based on the segment information inputted from report timing control signal extracting section 1701, and outputs the determined threshold value as threshold information to CQI generating section 107.

Tolerable delay time information generating section 1703 obtains remaining tolerable delay time from the tolerable delay time decided according to the type of data inputted from buffer 106 and a current delay, and outputs as tolerable delay time information to CQI transmission control section 1704.

Next, the configuration of base station apparatus 1800 will be described using FIG.18. Report timing observing section 1801 classifies the numbers of receive slots according to the number of receive slots in a time unit of CQI transmit assignment, and determines which segment each mobile apparatus 1700 belongs to, and outputs the segment to which each mobile apparatus 1700 belongs to the report timing control signal generating section 1803. Furthermore, report timing observing section 1801 can change the threshold value for each segment under the control of report timing control signal generating section 1803. Yet further, report timing observing section 1801 outputs the receive pattern of CQI receive slots in a time unit of CQI transmit assignment to condition setting section 1802.

Report timing control signal generating section 1803 outputs information indicating the number of times to report CQI and segments for which timing is to be changed to the channel coding section 209-1 to 209-n. Also, at the same time, report timing control signal generating section 1803 outputs to report timing observing section 1801 a signal to change the threshold value for each segment. For example, when mobile apparatuses 1700 are concentrated in a same segment, the report timing control signal generating section 1803 can determine a mobile apparatus 1700 that is to be preferentially scheduled by controlling to divide the concentrated segment further.

Channel coding section 209-1 to 209-n encodes transmit parameter information and scheduling information inputted from condition setting section 207 and the segment information inputted from report timing control signal generating section 1803, and outputs to modulator 210-1 to 210-n. At this time, channel coding section 209-1 to 209-n encodes and outputs the transmit parameter information to be transmitted to a mobile apparatus as an object to transmit to in scheduling, or when transmitting on a common control channel, which all the mobile apparatuses receive, encodes and outputs as transmit parameter information for the specific channel.

As described above, according to the communication terminal apparatus and the base station apparatus of the present embodiment, in addition to the effect of the above embodiment 3, the threshold value with which the tolerable delay time is compared is set based on the segment information transmitted from the base station apparatus. Hence, even when the tolerable delay time of transmission data accumulated in the buffer is about as short as the tolerable delay times of transmission data in other mobile apparatuses, preferential scheduling can be performed among those mobile apparatuses, and elaborate scheduling can be performed according to the data type.

Note that although in the present embodiment information about transmission data is indirectly informed by using the number of transmit slots and the transmit pattern, only one of the number of transmit slots and the transmit pattern may be used.

In the above embodiments 1 to 5, CQI transmitted to the base station apparatus on the uplink can be any information indicating the communication quality of the mobile apparatus such as power value information of transmit power, information about remaining transmit power, i.e., the difference between tolerable maximum transmit power (upper limit value) of the mobile apparatus and transmit power of the individual channel, or information about the ratio of the remaining transmit power to the transmit power of the individual channel. Moreover, the above embodiments 1 to 5 can be used in combination.

As described above, according to the present invention, optimum scheduling can be performed for the uplink according to the data in each mobile station.

The present description is based on Japanese Patent Application No. 2002-295449 filed on October 8, 2002, which is herein incorporated by reference.

### Industrial Applicability

The present invention relates to a communication terminal apparatus and a base station apparatus, and is particularly suitable to be applied to a communication terminal apparatus and a base station apparatus in a system that performs high speed packet transmission on the uplink, wherein scheduling is performed by the base station apparatus based on CQI transmitted from the communication terminal apparatus.
**FIG.1**
   102 RECEIVE RADIO SECTION
   103 DESPREADING SECTION
   104 DEMODULATOR
   105, 109 CHANNEL CODING SECTION
   106 BUFFER
   107 CQI GENERATING SECTION
   108 BASE STATION INFORMATION EXTRACTING SECTION
   110 MODULATOR
   111 SPREADING SECTION
   112 TRANSMIT RADIO SECTION
   113, 1203 CQI TRANSMISSION CONTROL SECTION
   TRANSMISSION DATA
   QUALITY INFORMATION
   RECEIVED DATA
FIG.2
   206 CQI EXTRACTING SECTION
   207 CONDITION SETTING SECTION
FIG.3
   START
   ST301 DATA ACCUMULATED IN BUFFER?
   ST302 CQI GENERATION
   ST303 CQI TRANSMISSION
   END
FIG.4
   401, 1301 REPORT TIMING OBSERVING SECTION
FIG.5
   501 SCHEDULER
   502 TRANSMIT PARAMETER SETTING SECTION
   FROM REPORT TIMING OBSERVING SECTION 401
FIG.6
   1 SLOT
FIG.7
   ST701 DATA CUMULATIVE AMOUNT ≤ THRESHOLD VALUE?
   ST702 CQI GENERATION FOR USUAL NUMBER OF TRANSMIT SLOTS
   ST703 CQI GENERATION FOR INCREASED NUMBER OF TRANSMIT SLOTS
   ST704 CQI TRANSMISSION
FIG.9
   ST901 NUMBER OF CQI RECEIVE SLOTS ≤ THRESHOLD VALUE?
   ST902 USUAL SCHEDULING
   ST903 CONSIDER PREFERENTIAL SCHEDULING
   ST904 TRANSMIT SCHEDULING INFORMATION
FIG.10
   1001 TOLERABLE DELAY TIME INFORMATION GENERATING
   SECTION
FIG.11
   ST1101 TOLERABLE DELAY TIME
FIG.12
   1201 REPORT TIMING CONTROL SIGNAL EXTRACTING SECTION
   1202 REPORT TIMING CONTROL INSTRUCTING SECTION
FIG.13
   1303 REPORT TIMING CONTROL SIGNAL GENERATING SECTION
FIG.14
   1401 THRESHOLD VALUE SETTING SECTION
   1402 CQI TRANSMIT TIMING SETTING SECTION
FIG.15
   1501 DISTRIBUTION DETERMINING SECTION
   1502 CHANGE DECIDING SECTION
   1503 SEGMENT CHANGE SECTION
FIG.16
   CQI REPORT
   SEGMENT INFORMATION
   TRANSMIT INTERVAL
   TIME
FIG.17
   1702 REPORT TIMING CONTROL INSTRUCTING SECTION
   1703 TOLERABLE DELAY TIME INFORMATION GENERATING SECTION

## Claims

1. A communication terminal apparatus comprising:
a buffer that accumulates transmission data;
a CQI generating section that generates CQI according to communication quality; and
a transmission control section that controls transmission of said CQI according to one of the amount of transmission data accumulated in said buffer and a value related to the transmission data.

2. The communication terminal apparatus according to claim 1, wherein when transmission data is not accumulated in said buffer, said transmission control section does not transmit said CQI.

3. The communication terminal apparatus according to claim 1, wherein when the cumulative amount of transmission data accumulated in said buffer is no less than a threshold value, said transmission control section transmits in an increased number of slots in a given time in which slots said CQI is transmitted.

4. The communication terminal apparatus according to claim 1, wherein when a tolerable delay time is short, said transmission control section transmits in an increased number of slots in a given time in which slots said CQI is transmitted.

5. The communication terminal apparatus according to claim 3, wherein said transmission control section sets said threshold value based on segment information included in received data.

6. The communication terminal apparatus according to claim 1, wherein said transmission control section changes a transmit pattern of slots in said given time in which slots said CQI is transmitted, according to one of said amount of transmission data and said value related to the transmission data.

7. A base station apparatus comprising:
a CQI extracting section that extracts CQI from received data;
an observing section that observes the number of receive slots for said CQI;
a scheduler that performs scheduling based on said CQI extracted by said CQI extracting section and on said number of receive slots in a given time; and
a data generating section that generates transmission data according to scheduling made by said scheduler.

8. The base station apparatus according to claim 7, wherein said scheduler performs scheduling such that a communication partner from which said number of receive slots in a given time has increased can transmit at high priority.

9. The base station apparatus according to claim 7, wherein said scheduler performs scheduling taking into account a receive pattern of receive slots for said CQI in said given time.

10. A transmission method comprising the steps of:
accumulating transmission data in a buffer;
generating CQI according to communication quality; and
transmitting said CQI only when transmission data is accumulated in said buffer.
